Europäisches Patentamt

European Patent Office

Office européen des brevets

(19)

(11) Veröffentlichungsnummer: **0 259 767**
**B1**

(12) **EUROPÄISCHE PATENTSCHRIFT**

(45) Veröffentlichungstag der Patentschrift:
02.05.90

(21) Anmeldenummer: 87112779.1

(22) Anmeldetag: 02.09.87

(51) Int. Cl.⁴: **C02F 1/28**, B01D 24/22,
B01J 47/02

(54) **Filterpatrone zur Verbesserung der Qualität von drucklos hindurchgeleitetem Trinkwasser.**

(30) Priorität: **09.09.86  DE 3630639**

(43) Veröffentlichungstag der Anmeldung:
**16.03.88 Patentblatt 88/11**

(45) Bekanntmachung des Hinweises auf die Patenterteilung:
**02.05.90 Patentblatt 90/18**

(84) Benannte Vertragsstaaten:
**AT BE CH DE FR GB IT LI NL SE**

(56) Entgegenhaltungen:
**EP-A- 0 155 645**
**DE-A- 3 001 674**
**US-A- 2 955 923**

(73) Patentinhaber: **Alhäuser, Erich, Am Hölzeberg 2,
D-5412 Ransbach-Baumbach(DE)**

(72) Erfinder: **Alhäuser, Erich, Am Hölzeberg 2,
D-5412 Ransbach-Baumbach(DE)**

(74) Vertreter: **Beyer, Werner, Dipl.Ing., Patentanwälte
Dipl.-Ing. W. Beyer Dipl.-Wirtsch.-Ing. B. Jochem
Staufenstrasse 36 Postfach 174109, D-6000 Frankfurt /
Main(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Filterpatrone zur Verbesserung der Qualität von drucklos hindurchgeleitetem Trinkwasser, bestehend aus einem mit Ionenaustauschharz und/oder Aktivkohle sowie einem bakteriostatisch wirkenden Stoff, insbesondere Silber in dissoziierbarer Form, gefüllten Gefäß mit einer ringsum geschlossenen aufrechtstehenden Mantelwand sowie einer oberen und einer unteren Endwand, die zur Bildung von Ein- bzw. Auslaßöffnungen siebartig durchbrochen sind, wobei das Gefäß einen von der Auslaßöffnung getrennten Sammelraum zur Rückhaltung einer begrenzten Wassermenge enthält.

Eine Patrone mit einer solchen Gefäßausbildung ist in den verschiedensten Ausführungen in der EP-A 0 206 285 dargestellt und beschrieben. Dem Sammelraum obliegt dabei die Aufgabe, mit dem darin zurückgehaltenen Wasser ein Austrocknen der Filtermasse in der Patrone zu vermeiden, das wegen der dann nicht mehr vorhandenen bakteriostatischen Wirkung des hierzu dienenden Stoffes schnell zu einem unkontrollierten und dadurch die Verwendbarkeit der Patrone infrage stellenden Anwachsen der Bakterien innerhalb der Filtermasse führen würde.

Bei allen diesen Patronen geht der Sammelraum vom Boden des Gefäßes aus und endet in den meisten Fällen in einem so großen Abstand zum Patronenende bzw. dem Füllungsniveau, daß die Kapillarwirkung der Filtermasse nicht ausreicht, auch die oberen Schichten der Filtermasse zur Vermeidung der Austrocknung in den Ruhepausen feucht zu halten.

Bei einem Ausführungsbeispiel der EP-A 0 206 285 wird bereits versucht, diesem Mangel durch wenigstens ein sich von dem Sammelraum nach aufwärts erstreckendes Element mit eigener Kapillarwirkung abzuhelfen. Jedoch vermag auch diese Maßnahme, vor allem bei in Durchflußrichtung längeren Patronen nicht auszureichen, um die gesamte Patronenfüllung bis zu ihrem oberen Ende hinreichend feucht zu halten.

Aufgabe der Erfindung ist es, diesem Nachteil abzuhelfen und eine Patrone der eingangs genannten Art dahingehend weiterzubilden, daß - vor allem auch bei längeren Patronen - eine vollständige Feuchthaltung der Filtermasse während den Ruhepausen, in denen kein Wasser durch die Patrone geleitet wird, gewährleistet ist.

Erfindungsgemäß wird diese Aufgabe dadurch gelöst, daß zur Bildung einer oder mehrerer Sammelräume auf mindestens einen Teil des Gefäßumfangs, im Längsschnitt durch das Gefäß betrachtet, die Kontur der Mantelwand mit Abstand zu den Endwänden wenigstens eine das Gefäß nach oben erweiternde Stufe aufweist und daß der darunter liegende Teil der Mantelwand über die Stufe hinaus nach oben in das Gefäßinnere verlängert ist.

Im Gegensatz zu den bekannten Patronenausführungen, bei denen der Sammelraum stets vom Boden des Patronengefäßes ausgeht, wird bei der Erfindung der Sammelraum auf ein Zwischenniveau zwischen dem unteren und dem oberen Patronenende gelegt, so daß das im Sammelraum zurückgehaltene Wasser aufgrund der Kapillarwirkung der Filtermasse bis zu deren oberem Ende ansteigt und hierdurch auch die obersten Masseschichten feucht hält. Gleichzeitig wird jedoch das durch die Kapillarwirkung aus dem Sammelraum gesaugte Wasser aufgrund seiner Schwerkraft auch in den unteren Patronenbereich gelangen, so daß auch der dortige Teil der Filtermasse feucht gehalten wird. Vor allem bei sehr hohen Patronen kann es dabei auch zweckmäßig sein, die Kontur der Mantelwand mehrfach übereinander abzustufen und dadurch mehrere Sammelräume übereinander zu schaffen.

Die Erfindung führt gegenüber den bekannten Patronen darüber hinaus zu einer gleichmäßigeren Durchströmung des Patronenquerschnitts. Bei den bisher bekannten Patronen hat sich nämlich gezeigt, daß an den Grenzflächen zur Mantelwand eine höhere Strömungsgeschwindigkeit als im zentralen Bereich der Filtermasse auftritt, und zwar unabhängig davon, welche Form (z.B. Konusform, Zylinderform oder Kegelform) die Patrone aufweist. Die stufige Kontur der Mantelwand nach der Erfindung unterbricht eine solche erhöhte Grenzflächengeschwindigkeit und zwingt dadurch zu einer stärkeren Durchströmung des zentralen Bereichs der Filtermasse, wodurch die Filterkapazität besser ausgenutzt wird. Durch entsprechende Dimensionierung der Sammelräume ist es möglich, dennoch die Wirkung der Filtermasse auch im Bereich des Sammelraums bzw. der Sammelräume optimal auszunutzen, insbesondere dann, wenn der Filter diskontinuierlich betrieben wird, wie das insbesondere bei der Verwendung im Haushalt und Gewerbe der Fall ist.

Vorteilhafte Ausgestaltungen der Erfindung ergeben sich aus den abhängigen Ansprüchen den nachstehend in Verbindung mit der Zeichnung näher erläuterten Ausführungsbeispielen. Es zeigen:

Fig. 1 einen schematischen Vertikalschnitt durch eine erfindungsgemäß ausgebildete Patrone, wobei sich der Sammelraum über den Gesamtumfang der Patrone erstreckt,

Fig. 2 und 3 zwei abgeänderte Ausführungsformen der Patrone nach Fig. 1,

Fig. 4 einen schematischen Vertikalschnitt durch eine weitere Ausführungsform, bei welcher im Gegensatz zu den Ausführungsformen nach Fig. 1 - 3 der Sammelraum auf nur einen Teil des Patronenumfangs beschränkt ist,

Fig. 5 einen Querschnitt gemäß Schnittlinie V-V in Fig. 4, von unten betrachtet, und

Fig. 6 einen der Fig. 5 entsprechenden Querschnitt durch eine quaderförmige Patrone.

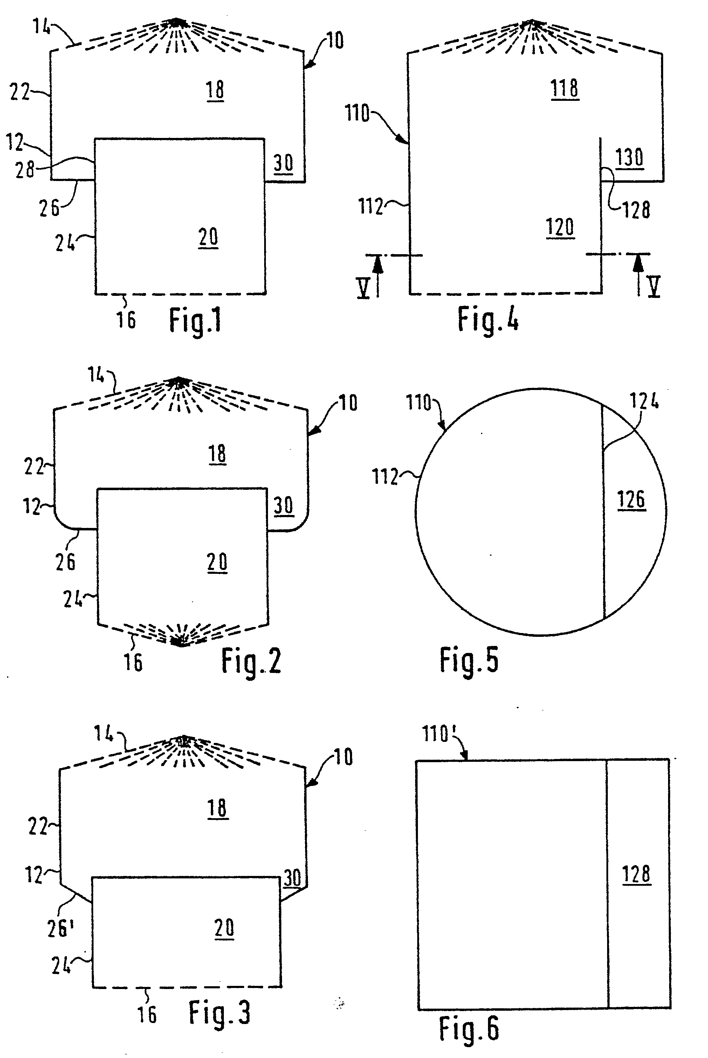

Die in Fig. 1 gezeigte Patrone weist ein zu einer senkrechten Achse rotationssymmetrisch ausgebildetes Gefäß 1o mit einer ringsum geschlossenen Mantelwand 12 auf. Das Gefäß hat ferner eine obere Endwand 14 und eine untere Endwand 16, die zur Bildung von Ein- bzw. Auslaßöffnungen siebartig durchbrochen sind.

Das Gefäß 1o enthält in an sich bekannter Weise eine (nicht gezeigte) Füllung oder Filtermasse aus Ionenaustauscherharz und/oder Aktivkohle sowie einem bakteriostatisch wirkenden Stoff, insbesondere Silber in dissoziierbarer Form, die aufgrund der mehr oder weniger körnigen Struktur dieser Komponenten von einer Vielzahl kapillarer Kanäle durchzogen ist, welche zu den Ein- und Auslaßöffnungen offen sind.

Das Gefäßinnere hat einen oberen weiteren Bereich 18 und einen unteren engeren Bereich 2o, die von zylindrischen Mantelwandteilen 22 bzw. 24 unterschiedlicher Durchmesser umschlossen sind. Die beiden Mantelwandteile 22, 24 sind durch einen an das untere Ende des oberen Mantelwandteils 22 anschließenden und sich radial nach einwärts bis zum unteren Mantelwandteil 24 erstreckenden ringförmigen ebenen Wandungsteil 26 verbunden, der eine Stufe im Verlauf der Mantelwandkontur bildet.

Der untere Mantelwandteil 24 ist über den ebenen Mantelwandteil 26 hinaus nach oben zu einem Kragen 28 verlängert und trennt dadurch einen ringförmigen Sammelraum 3o von dem bis zur Oberkante des Kragens 28 reichenden unteren Bereich 2o des Gefäßinneren ab. Der Sammelraum 3o ist gleichfalls mit Filtermaterial angefüllt und hält einen Teil des die Patrone bei ihrer Benutzung durchströmenden Wassers zurück. Er bildet somit einen Speicher aus dem im Falle der Verdunstung der Feuchtigkeit aus dem übrigen Teil der Patrone Wasser durch Kapillarwirkung nachgesaugt wird, das sowohl bis zum oberen Ende der Füllung unmittelbar unter der oberen Endwand 14 ansteigt als sich auch aufgrund seiner Schwerkraft in den unteren Bereich 2o des Gefäßinneren absenkt, so daß die Filtermasse in ihrer Gesamtheit feucht gehalten wird.

Bei dem Ausführungsbeispiel nach Fig. 1 schließt der ebene Wandteil 26 sowohl an den oberen Wandteil 22 als auch den unteren Wandteil 24, im Längsschnitt betrachtet, rechtwinklig unter Ausbildung je einer scharfen Kante an. Bei dem Ausführungsbeispiel nach Fig. 2 ist demgegenüber der Anschluß des ebenen Mantelwandteils 26, wiederum im Querschnitt betrachtet, ausgerundet, und ferner ist die untere Endwand 16, ebenso wie die obere Endwand 14, leicht kegelförmig ausgebildet und ebenso wie letztere mit sternförmig verlaufenden Schlitzen zur Bildung der Auslaßöffnungen versehen, die den besonderen Vorteil haben, daß sie nicht durch stehende Luftblasen gegenüber dem Durchtritt von Wasser zugesetzt werden können. Durch die Kegelform wird den Luftblasen vielmehr die Möglichkeit gegeben, unter eigenem Auftrieb radial nach auswärts abzuperlen.

Die Ausführungsform nach Fig. 3 entspricht weitgehend der nach Fig. 1 und unterscheidet sich von dieser nur dadurch, daß der die Stufe der Mantelwandkontur bildende Wandteil 26' bei vorausgesetztem zylindrischem Querschnitt des Gefäßes 1o nicht eben, sondern kegelstumpfförmig ausgebildet ist, was von Vorteil sein kann, wenn die Patrone in eine entsprechende Aufnahme eingesetzt werden soll.

Bei der Ausführungsform nach den Figuren 4 und 5 hat das dort mit 11o bezeichnete Gefäß auf dem größten Teil seines Umfangs eine durchgehend zylindrische Mantelwand 112, und ein sich nur auf einen Teil des Gefäßumfangs erstreckender Sammelraum 13o ist dadurch gebildet, daß im unteren Bereich des Gefäßes diese Mantelwand, im Querschnitt gemäß Fig. 5 betrachtet, einen sekantenartig verlaufenden ebenen Abschnitt 124 aufweist. Die dadurch gebildete Stufe wird durch einen horizontalen Wandteil 126 überbrückt, und der ebene Wandabschnitt 124 ist nach oben zu einem Kragen 128 in das Gefäßinnere verlängert, der darin den Sammelraum 13o vom unteren Bereich 12o des Gefäßinneren abteilt.

Fig. 6, die ebenfalls in Verbindung mit Fig. 4 betrachtet werden kann, zeigt schließlich eine Ausführungsform mit rechteckigem Querschnitt des darin mit 11o' bezeichneten Gefäßes, der im oberen Bereich 118 des Gefäßinneren durch Bildung gleicher Seitenlängen Quadratform aufweist. Dementsprechend besitzt der Wandteil 126' nicht wie in Fig. 5 Segment-, sondern Rechteckform.

Die Erfindung ermöglicht eine Anordnung des Sammelraums auf jedem beliebigen Zwischenniveau zwischen der oberen und der unteren Endwand des Gefäßes 1o, wobei dieses Zwischenniveau beliebig so ausgebildet werden kann, daß unter Berücksichtigung der Kapillarwirkung der jeweils verwendeten Filtermasse das hierzu aus dem Sammelraum gesaugte Wasser bis in die oberste Schicht der Masse ansteigt und diese dadurch vollständig feucht hält. Bei weniger hohen Gefäßen wird es zweckmäßig sein, den Sammelraum etwa in die Mitte zwischen den Endwänden zu legen. Bei hohen Gefäßen wird man demgegenüber durch mehrfache Stufung der Mantelwand zwei oder sogar mehr Sammelräume übereinander anordnen.

**Patentansprüche**

1. Filterpatrone zur Verbesserung der Qualität von drucklos hindurchgeleitetem Trinkwasser, bestehend aus einem mit Ionenaustauschharz und/oder Aktivkohle sowie einem bakteriostatisch wirkenden Stoff, insbesondere Silber in dissoziierbarer Form, gefüllten Gefäß mit einer ringsum geschlossenen aufrechtstehenden Mantelwand sowie einer oberen und einer unteren Endwand, die zur Bildung von Ein- bzw. Auslaßöffnungen siebartig durchbrochen sind, wobei das Gefäß einen von der Auslaßöffnung getrennten Sammelraum zur Rückhaltung einer begrenzten Wassermenge enthält, **dadurch gekennzeichnet,** daß zur Bildung einer oder mehrerer Sammelräume (3o; 13o) auf mindestens einem Teil des Gefäßumfangs, im Längsschnitt durch das Gefäß (1o; 11o) betrachtet, die Kontur der Mantelwand (12; 112) mit Abstand zu den Endwänden (14, 16) wenigstens eine das Gefäß nach oben erweiternde Stufe (26; 126) aufweist und daß der darunter liegende Teil (24; 124) der Mantelwand (12; 112) über die Stufe hinaus nach oben in das Gefäßinnere verlängert ist.

2. Filterpatrone nach Anspruch 1, **dadurch gekennzeichnet,** daß die Stufe scharfkantig ausgeprägt ist.

3. Filterpatrone nach Anspruch 1, **dadurch gekennzeichnet,** daß die Kontur der Stufe am Übergang zu wenigstens dem darüberliegenden Teil (22) der Mantelwand (12) ausgerundet ist.

4. Filterpatrone nach einem der vorhergehenden Ansprüche, **dadurch gekennzeichnet, daß** der die Stufe bildende Abschnitt (26; 126) wenigstens in der Hauptsache eben ist.

5. Filterpatrone nach einem der Ansprüche 1 bis 3, deren Gefäß Kreisquerschnitt aufweist, **dadurch gekennzeichnet, daß** der die Stufe bildende Wandabschnitt (26') wenigstens in der Hauptsache kegelstumpfförmig ist.

6. Filterpatrone nach einem der vorhergehenden Ansprüche, **dadurch gekennzeichnet, daß** sich die Stufe wenigstens angenähert auf halber Gefäßhöhe befindet.

7. Filterpatrone nach einem der Ansprüche 1 bis 5, **dadurch gekennzeichnet, daß** die Mantelwand des Gefäßes mehrere übereinander angeordnete Stufen mit entsprechenden Verlängerungen der darunter liegenden Wandteile aufweist.

8. Filterpatrone nach einem der Ansprüche 1 bis 6 mit in der Hauptsache kreisförmigem Gefäßquerschnitt, **dadurch gekennzeichnet, daß** die Mantelwand (112) des Gefäßes (11o) im unteren Teil einen sekantenartig verlaufenden ebenen Abschnitt (124) aufweist, dessen Übergang zu dem ringsum gewölbten oberen Teil der Mantelwand (112) die Stufe bildet.

9. Filterpatrone nach einem der Ansprüche 1 bis 7, **dadurch gekennzeichnet, daß** das Gefäß (11o') Rechteckquerschnitt aufweise und die Stufe bzw. Stufen an wenigstens einer Rechteckseite der Mantelwand angeordnet ist/sind.

1o. Filterpatrone nach Anspruch 9, **dadurch gekennzeichnet, daß** der Querschnitt des Gefäßes in einem Gefäßteil, vorzugsweise dem oberen Gefäßteil quadratisch ist.

## Claims

1. A filter cartridge for improving the quality of a pressureless supply of drinking water, comprising a vessel filled with ion-exchange resin and/or activated carbon and also a bacteriostatically acting material, in particular silver, in dissociable form, said vessel having an upright circumferential wall closed all round and also a top and a bottom end wall which are perforated in a sieve-like manner so as to form inlet and outlet openings, wherein the vessel comprises a collecting chamber separated from the outlet opening and intended to retain a limited amount of water, characterised in that to form one or more collecting chambers (30; 130) on at least one part of the periphery of the vessel, viewed in longitudinal section through the vessel (10; 110), the contour of the circumferential wall (12; 112) has, at a distance from the end walls (14, 16), at least one step (26; 126) which upwardly widens the vessel, and in that the part (24; 124) of the circumferential wall (12; 112) situated thereunder is extended beyond the step upwardly into the interior of the vessel.

2. A filter cartridge according to Claim 1, characterised in that the step is stamped out so as to be sharp-edged.

3. A filter cartridge according to Claim 1, characterised in that the contour of the step is rounded at the transition into at least the part (22) of the circumferential wall (12) situated thereabove.

4. A filter cartridge according to any one of the preceding Claims, characterised in that the portion (26; 126) forming the step is at least mainly flat.

5. A filter cartridge according to any one of Claims 1 to 3, the vessel of which is of circular cross-section, characterised in that the wall portion (26') forming the step is at least mainly frustoconical.

6. A filter cartridge according to any one of the preceding Claims, characterised in that the step is situated at least approximately at half the vessel height.

7. A filter cartridge according to any one of Claims 1 to 5, characterised in that the circumferential wall of the vessel has a plurality of steps disposed one above the other with corresponding extensions of the wall parts situated thereunder.

8. A filter cartridge according to any one of Claims 1 to 6, of substantially circular vessel cross-section, characterised in that in its lower part the circumferential wall (112) of the vessel (110) has a flat portion (124) extending in the manner of a secant, the transition of which into the generally domed upper part of the circumferential wall (112) forms the step.

9. A filter cartridge according to any one of Claims 1 to 7, characterised in that the vessel (110') is of rectangular cross-section and the or each step is arranged on at least one rectangular side of the circumferential wall.

10. A filter cartridge according to Claim 9, characterised in that the cross-section of the vessel is square in one part of the vessel, preferably the upper part of the vessel.

## Revendications

1. Cartouche filtrante opérant sans surpression pour le traitement de l'eau potable/ comprenant un récipient rempli d'une résine échangeuse d'ions et/ou de charbon actif ainsi que d'une substance à effet bactériostatique, particulièrement de l'argent sous forme dissociable, ayant une enveloppe périphérique fermée ainsi qu'une paroi d'extrémité supérieure et une paroi d'extrémité inférieure qui sont perforées à la manière de tamis pour constituer des orifices d'admission et de sortie, le récipient comprenant une chambre collectrice distincte le l'orifice de sortie pour la retenue d'une quantité d'eau définie, caractérisée par le fait que, pour former une ou plusieurs chambres collectrices (30, 130), le profil de l'enveloppe (12, 112) présente au moins un gradin (26, 126), élargissant le récipient vers le haut, à une certaine distance des parois d'extrémité (14, 16), sur au moins une partie de la périphérie du récipient, selon une section longitudinale du récipient (10, 110) et que la partie (24, 124) de l'enveloppe (12, 112) se trouvant au-dessus est prolongée au-dessus du gradin vers le haut dans l'intérieur du récipient.

2. Cartouche filtrante selon la revendication 1, caractérisée par le fait que le gradin est formé à angle vif.

3. Cartouche filtrante selon la revendication 1, caractérisée par le fait que le profil du gradin est arrondi à la jonction sur au moins la partie surplombante (22) de l'enveloppe (12).

4. Cartouche filtrante selon l'une des revendications précédentes, caractérisée par le fait que le tronçon (26, 126) constituant le gradin est plan au moins dans sa partie principale.

5. Cartouche filtrante selon l'une des revendications 1 à 3, dont le récipient présente une section circulaire, caractérisée par le fait que le tronçon de paroi formant le gradin (26') est, au moins dans sa partie principale, en forme de tronc de cône.

6. Cartouche filtrante selon l'une des revendications précédentes, caractérisée par le fait que le gradin se trouve, au moins approximativement, à mi-hauteur du récipient.

7. Cartouche filtrante selon l'une des revendications 1 à 5, caractérisée par le fait que l'enveloppe du récipient présente plusieurs gradins superposés avec les prolongements correspondants de la partie de paroi qui se trouve au-dessous.

8. Cartouche filtrante selon l'une des revendications 1 à 6, avec section essentiellement circulaire pour le récipient, caractérisée par le fait que la paroi d'enveloppe (112) du récipient (110) présente à sa partie inférieure un tronçon (124) plan, en sécante, dont la transition avec la partie supérieure périphérique cintrée de la paroi de l'enveloppe (112) constitue le gradin.

9. Cartouche filtrante selon l'une des revendications 1 à 7, caractérisée par le fait que le récipient (110') présente une section à angle droit et le ou les gradins sont disposés sur au moins un côté rectangulaire de l'enveloppe.

10. Cartouche filtrante selon la revendication 9, caractérisée par le fait que la section du récipient, dans une de ses parties, de préférence, la partie supérieure, est carrée.

Fig.1

Fig.2

Fig.3

Fig.4

Fig.5

Fig.6